# EUROPÄISCHE PATENTANMELDUNG

(11) **EP 0 564 935 A1**
(43) Veröffentlichungstag der Anmeldung: **13.10.1993**
(21) Anmeldenummer: 93105091.8
(22) Anmeldetag: 27.03.1993
(51) Int. Cl.: C02F 3/12, C02F 3/20

(54) **Kläreinrichtung für Abwässer**

(30) Priorität: 07.04.1992 DE 4211567; 05.10.1992 DE 4233423
(71) Anmelder: IEG Industrie-Engineering GmbH, D-72770 Reutlingen (DE)
(72) Erfinder: Bernhardt, Bruno, W-7410 Reutlingen (DE)
(74) Vertreter: Möbus, Rudolf, Dipl.-Ing.

(57) **Zusammenfassung**

Die Kläreinrichtung für Abwässer weist mehrere, für einen Abwasserdurchfluß miteinander kombinierbare und im Vergleich mit herkömmlichen Klärbecken kleine und nach außen abschließbare Behandlungszellen (10) auf, die sich unter Unterdruck setzen lassen, mit dessen Hilfe eine Begasung des Abwassers in den einzelnen Behandlungszellen durchgeführt wird und auch ein Anheben des Abwassers von einer Behandlungszelle (10) zur nächsten Behandlungszelle durchführbar ist.

## Beschreibung

Die Erfindung betrifft eine Kläreinrichtung für Abwässer, mit Behältern zur Aufnahme der Abwässer und einer Vorrichtung zur Belüftung oder Begasung der Abwässer in mindestens einem der Behälter.

Bisher ist es üblich, die Abwässer einer Gemeinde oder Stadt zu einer Sammelkläranlage zu führen, wo die flüssigen und festen Bestandteile des Abwassers einer Klärbehandlung unterzogen werden. Dort gelangt das Abwasser zunächst in große offene Becken, in welchen ein Absetzen von Feststoffen und/oder eine Belüftung des Abwassers erfolgt. Der große Platzbedarf solcher Sammelkläranlagen wird überwiegend durch die großen offenen Klärbecken verursacht, die auch für die bekannte Geruchsbelästigung durch solche Anlagen verantwortlich sind. Die Belüftung der Klärbecken erfolgt durch Eindrücken von Druckluft in die Klärbecken, wobei für eine günstige Luftblasenausbildung eine relativ große Abwasserhöhe über den Düsenkörpern vorhanden sein muß. Mit zunehmender Größe der Klärbecken wächst die Wahrscheinlichkeit der Bildung von Strömungstoträumen und Bereichen ungleichmäßiger Abwasserströmung, was insbesondere bei biologisch arbeitenden Kläranlagen von Nachteil ist. Dort wirkt sich auch die Tatsache negativ aus, daß bei der Bildung der eingesetzten Druckluft die Luft stark erwärmt wird und sich diese Erwärmung auch auf das Abwasser überträgt. Die optimale Wirksamkeit von in biologischen Kläranlagen eingesetzten Bakterien liegt aber etwa bei 35° C. Übersteigt die Wassertemperatur 40°, fällt der Wirkungsgrad steil ab.

Der Erfindung liegt die Aufgabe zugrunde, eine Kläreinrichtung zu schaffen, die bei besserer Ausnutzbarkeit eines vorhandenen Platzes und mit geringerem Energieaufwand günstiger als herkömmliche, mit offenen Klärbecken und einer Druckgasbelüftung ausgerüstete Kläranlagen arbeitet.

Die gestellte Aufgabe wird erfindungsgemäß dadurch gelöst, daß als Behälter mehrere, für einen Abwasserdurchfluß miteinander kombinierbare und im Vergleich mit herkömmlichen Klärbecken kleine Behandlungszellen vorgesehen sind, die nach außen abgeschlossen und durch Verbindung mit einer Unterdruckquelle unter Unterdruck setzbar sind. Dabei kann vorteilhafterweise jede Behandlungszelle unterhalb ihres Abwasserspiegels mindestens einen mit einer gasdurchlässigen Wandung versehenen stationären oder beweglichen Gaseinleitungskörper aufweisen, aus welchem Gas, insbesondere Luft, unter der Wirkung oder Mitwirkung des in der Behandlungszelle herrschenden Unterdruckes heraus- und durch das Abwasser hindurch in Blasen nach oben gezogen wird.

Die eingangs genannten Nachteile herkömmlicher Kläranlagen können bereits weitgehend durch den Einsatz kleiner und geschlossener Behandlungszellen vermieden werden, denen eine strömungstechnisch günstige Form gegeben und die Belüftungstiefe durch die Unterdruckbildung in den Behandlungszellen unter einem Meter Wassersäule gehalten werden kann. Durch die geschlossenen Behandlungszellen werden Abwassertemperaturverluste vermieden, gleichzeitig aber auch eine insbesondere in biologisch arbeitenden Kläranlagen unerwünschte und schädliche zusätzliche Erwärmung des Abwassers durch das eingesetzte Behandlungsgas vermieden, weil durch die Unterdruckeinwirkung eine mindestens leichte Abkühlung des eingesetzten Gases erfolgt.

Die miteinander kombinierbaren kleinen Behandlungszellen erleichtern eine Dezentralisierung der Kläranlagen und ihre Aufteilung in einzelne, erzeugernahe Teilanlagen. Durch die geschlossene Bauweise der Kläreinrichtung kann dabei eine Geruchs- und Schadstoffbelastung der Umgebungsluft vermieden werden. Die Unterdruckbelüftung der Behandlungszellen erfordert einen merklich geringeren Energieeinsatz als eine Überdruckbelüftung. Die geringere Saugluftstromtemperatur erhöht die Sauerstofflöslichkeit an den Grenzflächen der sich bildenden Luftblasen, und der vergleichsweise kleine Einsaugdruck verhindert die Bildung einer hohen, energieverlustreichen Strömungsenergiedichte an den Einsaug- oder Einblasstellen. Die geschlossenen Behandlungszellen erlauben auch eine Gasbehandlung des Abwassers in einem Kreislaufverfahren und damit auch den wirtschaftlichen Einsatz von besonderen Behandlungsgasen, beispielsweise reinem Sauerstoff. Dabei ist auch eine kombinierte Unterdruck- und Druckbelüftung des Abwassers möglich, wenn beispielsweise Gas unter relativ geringem Überdruck in die Gaseinleitungskörper nachgefördert oder rückgeleitet wird.

Eine erfindungsgemäß ausgebildete Kläreinrichtung erlaubt eine unterschiedliche Gestaltung der Behandlungszellen und der darin angeordneten Begasungseinrichtung. Vorteilhafterweise können die Behandlungszellen jeweils durch mindestens eine annähernd vertikale Zwischenwandung, die sowohl oben wie auch unten mindestens eine Verbindungsöffnung frei läßt, in zwei Kammern gegliedert sein, in deren erste Kammer ein Klärwassereinlaß führt und deren zweite Kammer einen Klärwasserauslaß aufweist. In solchen Behandlungszellen bewegt sich das Abwasser wie in einer U-Röhre. Da durch die Unterdruckbildung ein Anheben des Abwasserspiegels möglich ist, der durch den sog. Airlift-Effekt der aufsteigenden Gasblasen der Begasungseinrichtung unterstützt wird, lassen sich bei den erfindungsgemäß ausgebildeten Behandlungszellen der Klärwassereinlaß und der Klärwasserauslaß in Vertikalrichtung gegeneinander versetzt anordnen. Wenn sich der mindestens eine Gaseinleitungskörper in der den Klärwasserauslaß aufweisenden Kammer der Behandlungszellen angeordnet ist und/oder bei einer Kombination von mehreren Behandlungszellen der Unterdruck über den Klärwasserauslaß in der Behandlungszelle wirksam wird, kann der Klärwasserauslaß höher als der Klärwassereinlaß gesetzt werden und damit eine nachgeschaltete Behandlungszelle höher gelegt werden als die vorangehende Behandlungszelle. Mit einer erfindungsgemäß ausgebildeten Kläreinrichtung kann somit unter Vermeidung von gesonderten Pumpen, die mechanisch auf das Abwasser einwirkende und dabei insbesondere biologische Klärmasse schädigende Förderorgane aufweisen, wie herkömmliche Förderschnecken, zum Hochfördern des Abwassers vermieden werden.

Bei einer Kombination mehrerer Behandlungszellen können zweckmäßig jeweils der Auslaß einer Behandlungszelle in den Einlaß einer anschließenden Behandlungszelle führen, der Einlaß der in Abwasser-Durchlaufrichtung ersten Behandlungszelle über einen Syphon mit einem Abwasser-Zuleitungskanal verbunden und der abwasserfreie Bereich der letzten Behandlungszelle mit einer gemeinsamen Unterdruckquelle verbunden sein.

Behandlungszellenpakete mit auf gleicher Höhe nebeneinander gesetzten oder mit gegeneinander vertikal versetzten benachbarten Behandlungszellen lassen sich ähnlich wie Lagertanks aus miteinander verschweißten Zuschnitten oder Formlingen aus Blech oder Kunststoffmaterial herstellen. Die Behandlungszellenpakete können aber auch in Betonfertigteile eingeformt sein. Die Vielfalt der Gestaltungsmöglichkeit begünstigt die Umgestaltung konventioneller Kläranlagen, da die dort vorhandenen Freiräume, Beckenquerschnitte usw. räumlich günstig ausgenutzt werden können. Die Behandlungszellen können auch etagenweise übereinander angeordnet sein, wobei das Klärwasser jeweils mittels einer Lufthebevorrichtung von einer tieferen auf eine höhere Etage anhebbar ist. So lassen sich z. B. vorhandene runde Klärbecken mit einer erfindungsgemäß ausgebildeten Etagenkläreinrichtung ausfüllen.

Die Behandlungszellen können auch als Rohrkörper ausgebildet sein. An den Enden einer einzeln eingesetzten rohrförmigen Behandlungszelle oder Behandlungszellengruppe kann zweckmäßig ein Vorklärbehälter oder ein Nachklärbehälter angeordnet sein. Der Gaseinleitungskörper kann vorteilhafterweise als im Abwasser bewegliches, in Längsrichtung der Behandlungszelle verlaufendes Rohr ausgebildet sein. Die Unterdruckbildung in der rohrförmigen Behandlungszelle oder Behandlungszellengruppe macht auch bei druckfreien Vorklär- und Nachklärbehältern keine Schwierigkeiten, da die rohrförmige Behandlungszelle an ihren Stirnseiten zweckmäßig jeweils teilweise durch eine Wandung verschlossen sein kann, die bis unter einen Mindestabwasserspiegel reicht, sich mindestens über den halben Rohrquerschnitt erstreckt und eine ausreichend große Abwasser-Durchgangsöffnung frei läßt. Große offene Belüftungsbecken können also auch durch ein liegendes Rohr ersetzt werden, das beispielsweise aus vorgefertigten Betonrohrkörpern bestehen kann. Ein solches Klärrohr für einzelne Großerzeuger von Abwässern läßt sich einschließlich der Vor- und Nachklärbehälter in ausgebaggerte Gräben verlegen, auch unter Straßen und Plätzen anordnen. Eine intensive Behandlung des Abwassers durch Begasung ist sichergestellt, da das aus dem Begasungs- oder Belüftungsrohr austretende Gas in dem durchfließenden Abwasser eine Strömung quer zur Längsrichtung der rohrförmigen Behandlungszelle auslöst, die sich durch mit Abstand von dem Gaseinleitungsrohr innerhalb des Abwasserbereiches angeordnete Leitwandungen zu einer Kreislaufströmung zwingen läßt, die sich der im allgemeinen langsamen Durchlaufströmung des Abwassers durch das Rohr überlagert und die intensive Begasung des gesamten Abwassers sicherstellt.

Bei allen Ausführungsformen der Behandlungszellen lassen sich am Boden der Behandlungszellen Schlammabsetzbereiche ausbilden, die über verschließbare Entleerungsöffnungen oder mittels einer eingebauten Fördervorrichtung entleerbar sind. In den Behandlungszellen können außerdem zusätzlich im Abwasser bewegbare Dispergierkörper angeordnet werden, beispielsweise axialverstellbare Scheibenkörper mit durch einen Coanda-Effekt bewirkende Runddrähte begrenzten Durchlaßöffnungen. Die Gleichmäßigkeit der erzielten Geschwindigkeitsprofile des Abwassers und der Begasungsströme ist insbesondere in Bioreaktoren von Bedeutung. Dort ist auch die Vermeidung von Scherkräften besonders wichtig, die Mikroorganismuskulturen zerstöre können.

Mit einer erfindungsgemäß ausgebildeten Kläreinrichtung läßt sich insbesondere eine biologische Abwasserklärung sehr rasch und wirkungsvoll ausführen. Es hat sich gezeigt, daß einfache Ventilatoren als Unterdruckerzeuger ausreichend sind und nur eine geringe Erwärmung der geförderten Luft oder des geförderten Gases verursachen, was bei einer Rückführung des Gases im Kreislaufverfahren wichtig ist. Eine aus mehreren Behandlungszellenpaketen zusammengesetzte Kläreinrichtung erlaubt eine unterschiedliche Abwasserbehandlung in den einzelnen Paketen. Hierbei kann auch ein Betriebsverfahren von Vorteil sein, bei welchem der Unterdruck impulsweise auftritt, ein Unterdruckerzeuger oder die Gaszufuhr also entsprechend betrieben wird. Auch kann es vorteilhaft sein, beispielsweise abhängig von der herrschenden Außentemperatur oder der Zusammensetzung der zu behandelnden Abwässer, wenn ein Teil des Begasungsvolumens in die Behandlungszellen zurückgeleitet wird und nur ein Teilstrom zweckmäßig über Filter ins Freie abgeleitet und durch einen entsprechenden Frischgaszufluß ersetzt wird. In jedem Fall erleichtert eine erfindungsgemäß ausgebildete Kläreinrichtung die auch Behandlung von Sonderabwässern, beispielsweise die Behandlung des Problemabwassers "Gülle" in Tierhaltungsbetrieben.

Nachfolgend werden verschiedene Ausführungsbeispiele einer erfindungsgemäß ausgebildeten Kläreinrichtung anhand der beiliegenden Zeichnungen näher erläutert.

Im einzelnen zeigen:
- Fig. 1: ein erstes Ausführungsbeispiel des Erfindungsgegenstandes mit mehreren miteinander kombinierten Behandlungszellen in vertikal ansteigender Anordnung;
- Fig. 2: die Behandlungszellenkombination in horizontaler Anordnung mit zusätzlichen Einrichtungsteilen;
- Fig. 3: ein zweites Ausführungsbeispiel einer Behandlungszellenkombination mit in horizontaler Richtung ansteigender Zellenanordnung;
- Fig. 4: einen schematischen Querschnitt durch eine Kläreinrichtung mit etagenweise angeordneten mehreren und miteinander für einen Abwasserdurchlauf kombinierten Behandlungszellen;
- Fig. 5: eine Draufsicht auf den Belüftungsboden einer Etage der Kläreinrichtung nach Fig. 4;
- Fig. 6: eine gegenüber Fig. 5 vergrößerte Teilschnittdarstellung durch den Belüftungsboden entlang der Linie VI-VI in Fig. 5;
- Fig. 7: ein Ausführungsbeispiel einer Kläreinrichtung in Form einer rohrförmigen Behandlungszelle mit einem schematisierten zentralen Längsschnitt durch das Klärrohr und einen vor- und einen nachgeschalteten Behälter der Kläreinrichtung;
- Fig. 8: einen gegenüber Fig. 7 vergrößerten zentralen Längsschnitt durch das Klärrohr in einer Ebene quer zu der Schnittebene der Fig. 7;
- Fig. 9: einen Querschnitt durch das Klärrohr entlang der Linie IX-IX in Fig. 8 und um 90° in die natürliche Vertikalausrichtung der Teile gedreht.

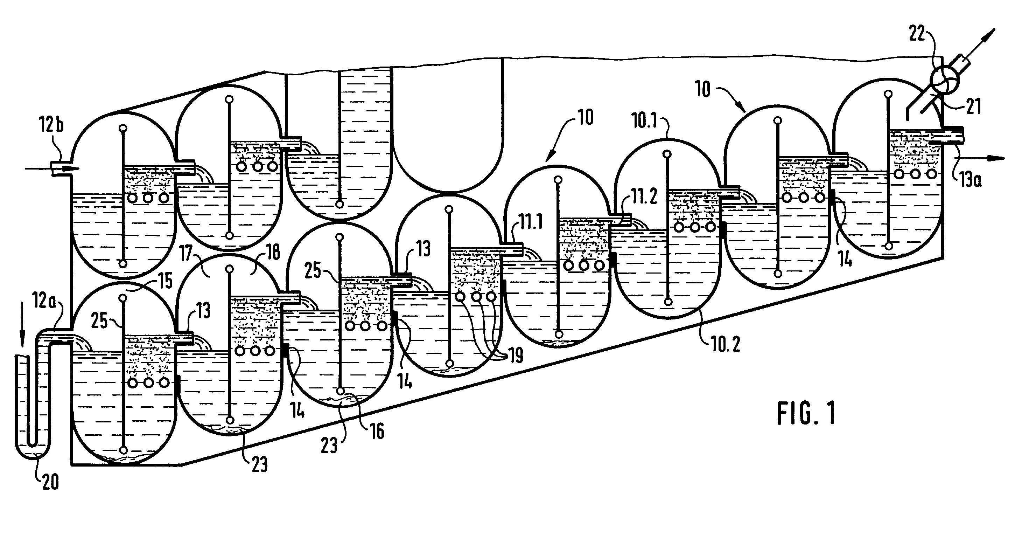

Fig. 1 zeigt ein Paket von acht Behandlungszellen 10, welche die Form von Tankbehältern mit ovalem Querschnitt aufweisen und in ansteigender Folge miteinander kombiniert sind. Die Behandlungszellen sind jeweils aus einem oberen und unteren wannenförmigen Blechformling 10.1 und 10.2 gebildet, die nur durch die nicht bezeichneten BehälterStirnwände miteinander verbunden sind. Über die Länge der Behandlungszellen 10 verlaufen die Flanschränder 11.1 und 11.2 der beiden Blechformlinge 10.1 und 10.2 jeweils mit Abstand voneinander und begrenzen entweder einen spaltförmigen Abwasser-Einlaß 12 oder einen spaltförmigen Abwasser-Auslaß 13, wobei in dem Paket von Behandlungszellen 10 der Klärwasser-Auslaß gleichzeitig den Klärwasser-Einlaß der nachfolgenden Behandlungszelle 10 bildet. Die unteren Blechformlinge 10.2 der Behandlungszellen sind durch Schweißnähte 14 miteinander verbunden. Jede Behandlungszelle 10 ist durch eine vertikale Zwischenwandung 25, die jeweils mit Abstand von dem oberen und dem unteren Blechformling 10.1, 10.2 endet und somit einen oberen Verbindungsspalt 15 und einen unteren Verbindungsspalt 16 frei läßt, in zwei Kammern unterteilt, nämlich eine erste Kammer 17 und eine zweite Kammer 18. In der den Klärwasser-Auslaß 13 aufweisenden zweiten Kammer 18 sind jeweils drei parallel zueinander verlaufende gelochte Begasungsrohre 19 angeordnet. Vor dem Klärwasser-Einlaß 12a der in Fig. 1 links außen angeordneten und tiefsten Behandlungszelle 11 ist ein Syphon 20 angeordnet, über welchen das Klärwasser in das Behandlungszellenpaket eingeleitet wird. Die in Fig. 1 rechts außen dargestellte oberste Behandlungszelle 10 des Behandlungszellenpakets ist über eine Öffnung 21 mit der Ansaugseite eines Ventilators 22 verbunden. Der Klärwasser-Auslaß 13a kann in nicht dargestellter Weise mit dem auf gleicher Höhe liegenden Klärwasser-Einlaß 12b eines aufgesetzten zweiten Behandlungszellenpakets verbunden sein.

Der durch den Ventilator 22 erzeugte Unterdruck wirkt sich über die spaltartigen Verbindungsöffnungen 12 und 13, die zwischen den einzelnen Behandlungszellen bestehen, in allen Behandlungszellen aus. Durch ihn wird in die Begasungsrohre 19 eingebrachte Luft in in Fig. 1 durch Punkte angedeuteten Blasen durch das Klärwasser hindurch nach oben gezogen und der Klärwasserspiegel in der zweiten Kammer 18 angehoben, so daß das Klärwasser durch den gegenüber dem Klärwasser-Einlaß 12 vertikal höher liegenden Klärwasser-Auslaß 13 in die nachfolgende, entsprechend höher gesetzte Behandlungszelle 10 ausfließen kann. Auf diese Weise erfolgt in jeder Behandlungszelle 10 eine intensive Begasung und gleichzeitig ein Hochfördern des Klärwassers.

Am Boden jeder Behandlungszelle 10 kann sich Klärschlamm 23 absetzen, der laufend oder von Zeit zu Zeit durch nicht dargestellte, stirnseitig in die Behandlungszellen einbringbare Schaber o.dgl. entfernbar ist. Vor allem die erste und unterste Behandlungszelle 10 des Behandlungszellenpakets dient zum Absetzen der nicht schwimmfähigen Stoffe und kann daher auch mit einem größeren unteren Verbindungsspalt 16 versehen werden.

Die Begasung der Behandlungszellen 10 über die Begasungsrohre 19 kann intermittierend erfolgen, wodurch das Klärwasser in den Behandlungszellen in eine auf- und abwärts schwingende Bewegung gebracht werden kann, die den Begasungseffekt begünstigt.

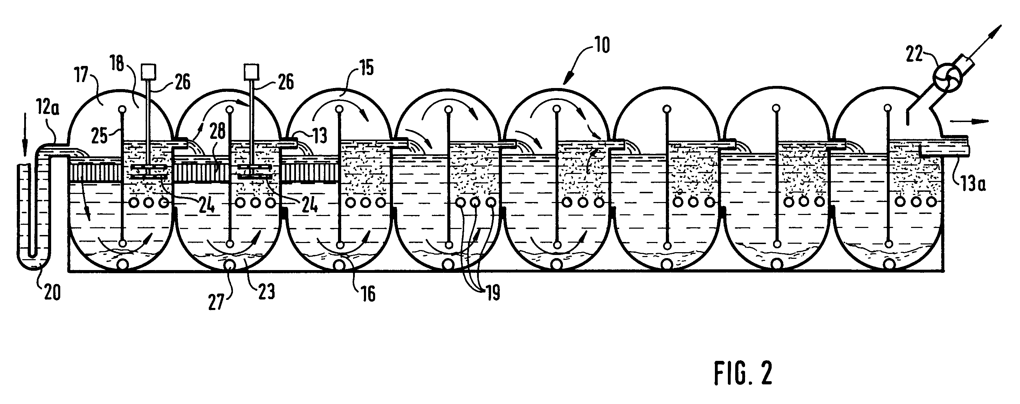

In Fig. 2 ist ein Paket von Behandlungszellen 10 dargestellt, in welchem die Behandlungszellen und damit auch der Klärwasser-Einlaß 12a und der Klärwasser-Auslaß 13a sowie die dazwischenliegenden Klärwasser-Auslässe 13 alle auf gleicher Höhe liegen. In den beiden ersten Behandlungszellen, die auf den Klärwasser-Einlaß 12a folgen, sind in der zweiten Kammer 18 oberhalb der Begasungsrohre 19 Dispergierscheiben 24 an einer vertikalen, auf und ab bewegbaren Hubstange 26 angeordnet. Diese mit Abstand voneinander angeordneten Dispergierscheiben 24 bestehen aus einem Runddrahtgeflecht mit zahlreichen Durchlaßöffnungen. Ihre Bewegung verstärkt den Begasungseffekt. Außerdem sind in den ersten Behandlungszellen Lamellenabscheider 28 für die nicht schwimmfähigen Stoffe angeordnet. In Fig. 2 sind untere Ableitungsrohre 27 oder Ableitungsöffnungen für den sich absetzenden Klärschlamm 23 eingezeichnet. Ein günstiger Nebeneffekt der sich bildenden Unterdruckblasen und des Absaugeprinzips ist der problemlose Austrag aller sich am Klärwasserspiegel in den Behandlungszellen 10 bildenden Schäume über den über die oberen Verbindungsspalte 15 der Behandlungszellen führenden Luftpfad des Behandlungszellenpakets.

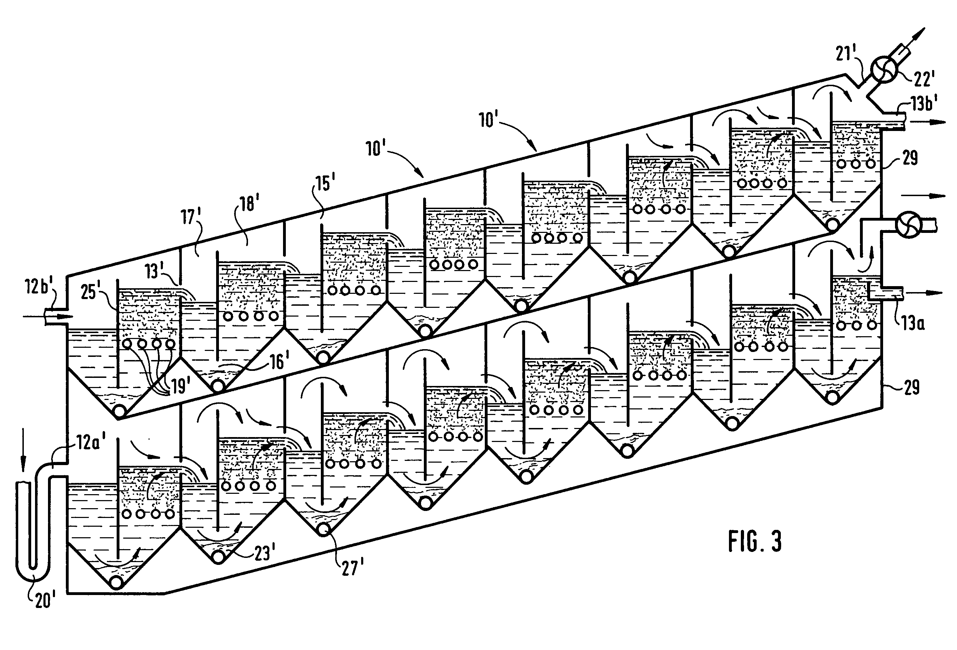

Fig. 3 zeigt gleiche Behandlungszellen wie in Fig. 1, die zu einem Behandlungszellenpaket zusammengefaßt sind. Deshalb sind in Fig. 3 gleiche Teile mit den gleichen Bezugsziffern wie in Fig. 1, ergänzt durch einen Indexstrich, bezeichnet. Der Unterschied besteht jedoch darin, daß die Behandlungszellen 10' in stapelbare Körper 29, beispielsweise Betonfertigteile, eingeformt sind.

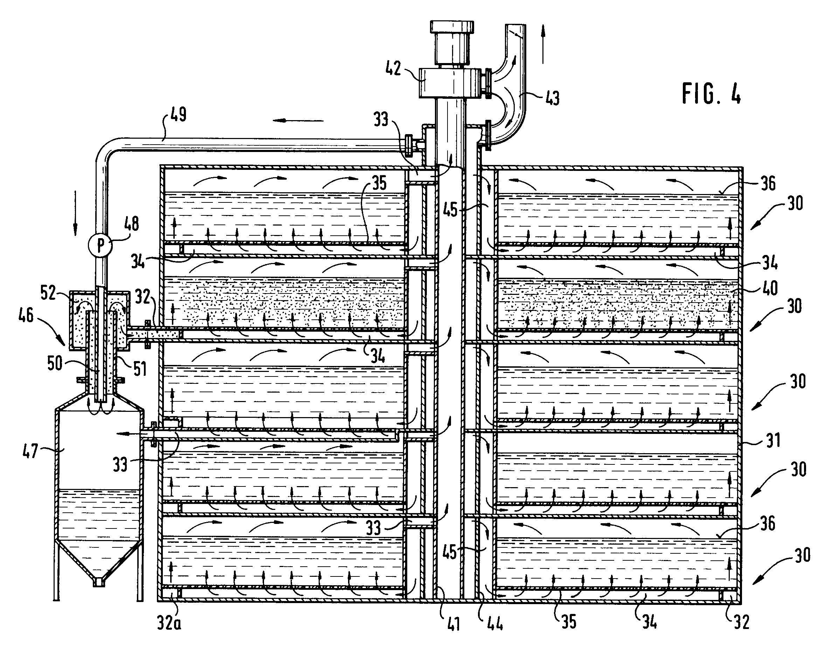

Fig. 4 zeigt eine andere Ausführungsform von miteinander zu einem Klärwasserdurchfluß kombinierten Behandlungszellen. Hier sind fünf Behandlungszellen 30 übereinander in einem runden Behälterturm etagenförmig angeordnet. Der Unterdruck in den Behandlungszellen 30 wird mittels eines gemeinsamen Ventilators 42 über eine zentrale Ansaugleitung 41 erzielt, mit welcher jede Behandlungszelle 30 über mindestens eine Öffnung 33 verbunden ist. Ein Teil der über das zentrale Unterdruckrohr 41 abgesaugten Luft wird über eine Verbindungsleitung 43 in ein konzentrisch zum gemeinsamen Absaugrohr 41 angeordnetes Verteilerrohr 44 in jeder Etage in eine Gaskammer 34 geleitet, die sich praktisch über den gesamten Querschnitt jeder Behandlungszelle 30 erstreckt und durch eine Siebwandung 35 von dem darüberliegenden, das Klärwasser 36 aufnehmenden Bereich der Behandlungszelle 30 getrennt ist. Durch den in den Behandlungszellen 30 herrschenden Unterdruck wird die in den Gasraum 34 geleitete Luft durch die Öffnungen der Siebwandung 35 hindurch in Blasen 40 durch das Klärwasser hindurchgeleitet, wie in einer der fünf Behandlungszellen 30 angedeutet ist.

Das Klärwasser wird über einen ringförmigen Zuleitungskanal 32 in die unterste der fünf Behandlungszellen 30 eingeleitet, dort behandelt und anschließend jeweils über eine Unterdruck-Fördervorrichtung in die darüberliegende Behandlungszelle 30 weitergeleitet. Für jeden dieser Übergänge ist eine gesonderte Unterdruck-Hubvorrichtung 46 vorgesehen, von denen nur eine in Fig. 4 dargestellt ist, die zur Förderung des Klärwassers aus der dritten in die vierte Behandlungszelle 30 dient. Über eine unterhalb der Gaskammer 34 angeordnete Ablaufrinne 33 gelangt das Abwasser zunächst in einen Schlammabsetzbehälter 47 der Hubvorrichtung 46. In der Hubvorrichtung wirkt über den Einlaßkanal 32 der vierten Behandlungszelle 30 einerseits der in dieser Zelle herrschende Unterdruck. Anderseits wird ein mittels einer Verstärkungspumpe 48 über eine Leitung 49 von der Druckseite des Ventilators 42 zugeführter Teilluftstrom über eine Drucklanze 50 in ein Steigrohr 51 der Hubvorrichtung 46 geleitet, in welchem die Luft unter Mitbewegung des Klärwassers nach oben in eine Sammelkammer 52 steigt und von dort aus zusammen mit der Luft in die ringförmige Eintrittsleitung 32 der vierten Behandlungszelle 30 gelangt.

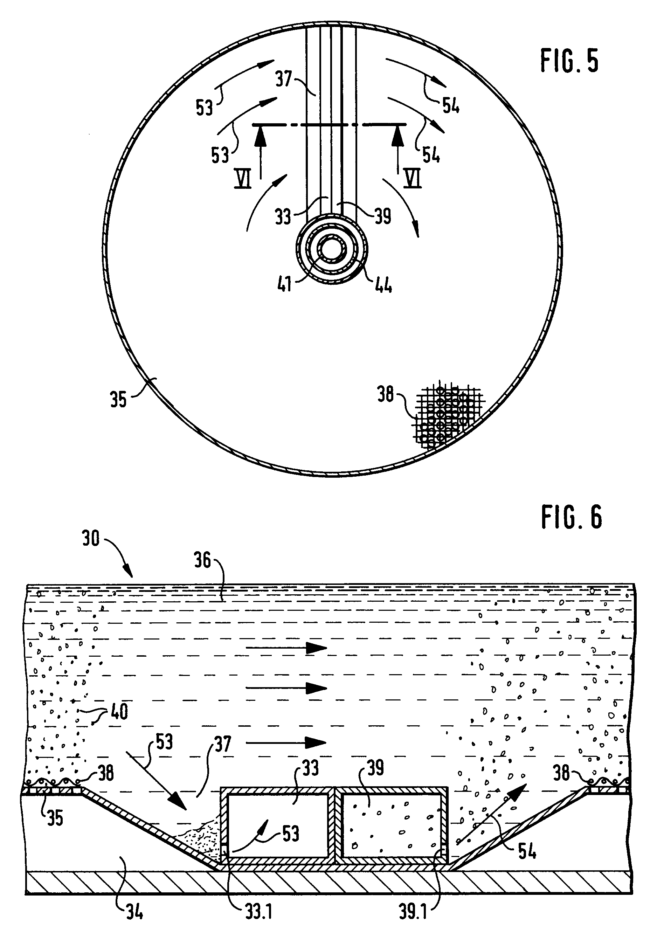

Die aus den Fig. 5 und 6 ersichtliche Siebwandung 35, welche die Gaskammer 34 von dem darüberliegenden, das Klärwasser 36 aufnehmenden Bereich jeder Behandlungszelle 30 trennt, ist mit einer radialverlaufenden Rinne 37 versehen. Über die Siebwandung 35 ist gemäß Fig. 6 ein Runddrahtgitter 38 gelegt, das bewirkt, daß die durch die Öffnungen der Siebwandung 35 aufsteigenden Luftblasen 40 einem ihr Abheben begünstigenden Coanda-Effekt unterworfen sind. In der Radialrinne 37 sind zwei ebenfalls radialverlaufende Kanäle ausgebildet, nämlich der Klärwasser-Ableitungskanal 33 und ein mit dem Klärwasser-Einlaßkanal 32 verbundener Kanal 39. Durch seitliche Schlitze 33.1 des Ableitungskanales 33 wird das Klärwasser 36 unter Mitnahme des sich in der Vertiefung 37 vor diesen Schlitzen angesammelten Schlammes abgezogen. Durch auf der entgegengesetzten Seite der Rinne 37 ausgebildete Seitenschlitze 39.1 des Kanales 39 gelangt das aus einer Hubvorrichtung 46 kommende Klärwasser/Luft-Gemisch in die Behandlungszelle 30. Ableitungspfeile 53 und Zuleitungspfeile 54 verdeutlichen diesen Vorgang. Durch das tangentiale Einströmen des Klärwassers durch die seitlichen Schlitze 39.1 wird dem Klärwasser in den Behandlungszellen 30 eine Drehbewegung erteilt.

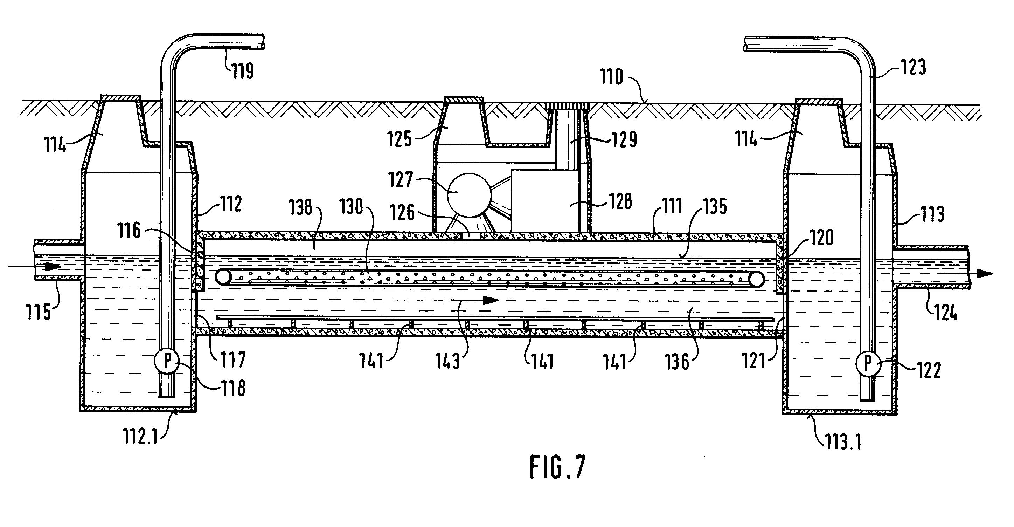

Die Fig. 7 bis 9 zeigen eine als Klärrohr ausgebildete Behandlungszelle einer Kläreinrichtung. Kernstück der aus Fig. 7 ersichtlichen, unterhalb der Erdoberfläche 110 angeordneten Kläreinrichtung ist ein liegendes Betonrohr 111, das zwischen zwei Schachtbehältern 112 und 113 angeordnet ist, die ebenfalls aus Betonrohrkörpern bestehen und mit Einstiegsaufsätzen 114 versehen sind. Der in der Zeichnung linke Schachtbehälter 112 dient als Vorklärbehälter, in welchen eine Abwasserzuflußleitung 115 mündet. Das Klärrohr 111 ist mit seiner einen Stirnseite an den Schachtbehälter 112 angeschlossen, doch ist der obere und größere Teil dieser Stirnseite durch eine Wandung 116 verschlossen. Die Zulauföffnung 117 des Klärrohres 111 befindet sich mit Abstand von dem Boden 112.1 des Schachtbehälters 112, so daß sich in diesem Vorklärbehälter Feststoffe im Bodenbereich absetzen können, die mittels einer Schlammpumpe 118 über eine Leitung 119 nach außen gefördert werden können.

Der am anderen Ende des Klärrohres 111 angeordnete Schachtbehälter 113 dient als Nachklärbehälter. Auch an diesem Ende ist die Stirnseite des Klärrohres 111 in ihrem oberen und größeren Teil mittels einer Wandung 120 verschlossen. Auch dort befindet sich die Verbindungsöffnung 121 des Klärrohres 111 oberhalb des Bodens 113.1 des Schachtbehälters, so daß sich auch dort im Bodenbereich Feststoffe absetzen können, die mittels einer Schlammpumpe 122 über eine Leitung 123 nach außen förderbar sind. Aus dem Schachtbehälter 113 fließt das behandelte Abwasser durch ein Abflußrohr 124 ab.

Auf dem Klärrohr 111 ist in seinem Mittelbereich eine über einen Einstieg 125 zugängliche Entlüftungseinrichtung angeordnet, die einen über einer Rohröffnung 126 angeordneten Ventilator 127 und eine Filtervorrichtung 128 für die vom Ventilator 127 aus dem Klärrohr 111 geförderten Gase aufweist. Die Gase, insbesondere Luft, gelangen aus der Filtervorrichtung über einen Schacht 129 nach außen.

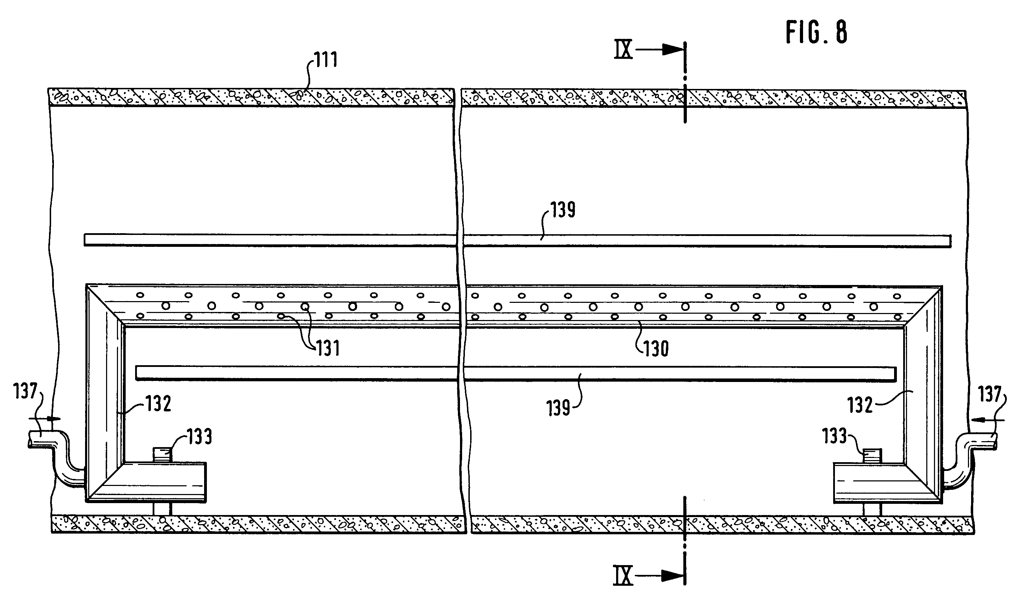

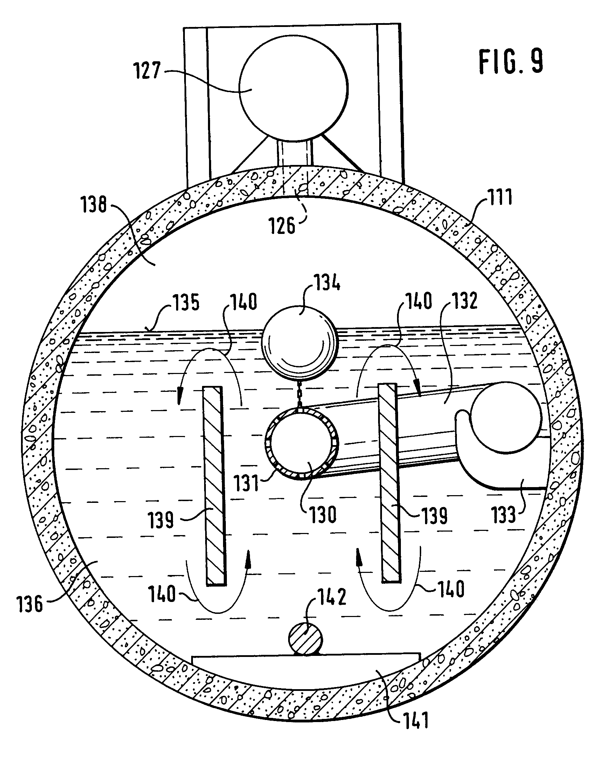

Der Aufbau des Klärrohres 111 ist aus den Schnittbildern der Fig. 8 und 9 ersichtlich. In seinem Innern ist ein mit Düsenöffnungen 131 versehenes Belüftungsrohr 130 angeordnet, das sich in Längsrichtung des Klärrohres 111 erstreckt und an beiden Enden über rohrförmige, abgewinkelte Schwenkhebel 132 in an der Wandung des Klärrohres 111 befestigte Lagergabeln 133 eingehängt ist. An dem Belüftungsrohr 130 sind Schwimmkörper 134 befestigt, von denen einer aus Fig. 9 ersichtlich ist. Durch diese Schwimmkörper 134 ist das verschwenkbar gelagerte Belüftungsrohr 130 immer im gleichen Abstand von dem im Klärrohr 111 vorhandenen Abwasserspiegel 135 gehalten. Dem Belüftungsrohr 130 wird über aus Fig. 8 ersichtliche Schlauchleitungen 137 und über die hohlen Schwenkhebel 132 von einer nicht dargestellten Druckquelle her Gas, insbesondere Luft, zugeleitet, die nach ihrem Austritt aus dem Belüftungsrohr und ihrem Durchgang durch das Abwasser 136 in den oberhalb des Abwasserspiegels befindlichen Raum 138 des Klärrohres 111 gelangt. Dieser Raum 138 steht unter der Wirkung des Ventilators 127 unter Unterdruck. Der Ventilator 127 leitet die Luft aus dem Klärrohr über die Filtervorrichtung 128 nach außen ab.

Zu beiden Seiten des Belüftungsrohres 130 sind in dem mit Abwasser 136 gefüllten Bereich des Klärrohres 111 mit Abstand vom Belüftungsrohr vertikale Leitwände 139 sowohl mit Abstand vom Abwasserspiegel 135 als auch mit Abstand von der Wandung des Klärrohres angeordnet und in nicht dargestellter Weise über Tragstangen an der Wandung des Klärrohres 111 befestigt. Die Leitwände 139 dienen zur Ausbildung einer durch Pfeile 140 angedeuteten Kreislaufströmung des Abwassers innerhalb des Klärrohres 111.

An der tiefsten Stelle des liegenden Klärrohres 111 sind in gleichmäßigen Abständen Schaber 141 an einer gemeinsamen Verbindungsstange 142 (Fig. 9) angeordnet. Diese Schaber lassen sich im Pilgerschrittverfahren mittels einer nicht dargestellten Antriebsvorrichtung in der einen Längsrichtung auf dem Rohr entlangbewegen, anschließend nach oben abheben und in abgehobenem Zustand in ihre Ausgangsstellung zurückbewegen und dort wieder absenken. Dadurch kann sich absetzender Schlamm aus dem Rohr entgegen der durch einen Pfeil 143 in Fig. 7 angedeuteten Durchlaufrichtung des Abwassers aus dem Klärrohr 111 durch die Eintrittsöffnung 117 in den als Vorklärbehälter dienenden Schachtbehälter 112 ausgetragen werden.

Die Kläreinrichtung kann mehrere koaxial angeordnete und jeweils mit Belüftungsrohren versehene Klärrohre 111 aufweisen, wobei den Belüftungsrohren auch unterschiedliche Gase zugeleitet werden können. Bei einer Regulierung des Abwasserspiegels in den Klärrohren 111 können auch unbewegliche Belüftungsrohre vorgesehen werden. Das Klärrohr 111 kann nicht dargestellte Anschlußöffnungen aufweisen, durch welche auch flüssige oder pulverförmige Zusatzstoffe in das Klärrohr und das darin befindliche Abwasser eingegeben werden können. Als Schlammfördervorrichtung können auch im Kreislauf bewegte Kettenförderer vorgesehen sein, deren Förderorgane durch den abwasserfreien oberen Bereich 138 hindurch an das ablaufseitige Ende des Klärrohres 111 zurückbewegt werden. Die Entlüftungseinrichtung kann auch an ein stirnseitiges Ende des Klärrohres 111 angeschlossen sein.

## Patentansprüche

1. Kläreinrichtung für Abwässer, mit Behältern zur Aufnahme der Abwässer und einer Vorrichtung zur Belüftung oder Begasung der Abwässer in mindestens einem der Behälter, dadurch gekennzeichnet, daß als Behälter mehrere für einen Abwasserdurchfluß miteinander kombinierbare und im Vergleich mit herkömmlichen Klärbecken kleine Behandlungszellen (10, 10'; 30; 111) vorgesehen sind, die nach außen abgeschlossen und durch Verbindung mit einer Unterdruckquelle (22, 22'; 42; 127) unter Unterdruck setzbar sind.

2. Kläreinrichtung nach Anspruch 1, dadurch gekennzeichnet, daß jede Behandlungszelle unterhalb ihres Abwasserspiegels mindestens einen mit einer gasdurchlässigen Wandung versehenen stationären oder beweglichen Gaseinleitungskörper (19, 19'; 34; 130) aufweist, aus welchem Gas, insbesondere Luft, unter der Wirkung oder Mitwirkung des in der Behandlungszelle herrschenden Unterdruckes heraus und durch das Abwasser hindurch in Blasen nach oben gezogen wird.

3. Kläreinrichtung nach Anspruch 1 oder 2, dadurch gekennzeichnet, daß die Behandlungszellen (10, 10') jeweils durch mindestens eine, mindestens annähernd vertikale Zwischenwandung (25, 25'), die sowohl oben wie auch unten mindestens eine Verbindungsöffnung (15, 16, 15', 16') frei läßt, in zwei Kammern (17, 18, 17', 18') gegliedert ist, in deren erste Kammer (17, 17') ein Klärwassereinlauf (12, 12a, 12', 12a') führt und deren zweite Kammer (18, 18') einen Klärwasserauslaß (13, 13a, 13', 13a') aufweist.

4. Kläreinrichtung nach Anspruch 3, dadurch gekennzeichnet, daß der Klärwassereinlaß (12, 12') und der Klärwasserauslaß (13, 13') in Vertikalrichtung gegeneinander versetzt angeordnet sind.

5. Kläreinrichtung nach einem der Ansprüche 1 bis 4, dadurch gekennzeichnet, daß der mindestens eine Gaseinleitungskörper (19, 19') in der den Klärwasserauslaß (13, 13') aufweisenden Kammer (18, 18') der Behandlungszellen (10, 10') angeordnet ist.

6. Kläreinrichtung nach einem der Ansprüche 1 bis 5, dadurch gekennzeichnet, daß bei einer Kombination mehrerer Behandlungszellen (10, 10') jeweils der Auslaß (13, 13') einer Behandlungszelle in den Einlaß (12, 12') einer anschließenden Behandlungszelle führt, der Einlaß (12a, 12a') der in Abwasser-Durchlaufrichtung ersten Behandlungszelle über einen Syphon (20, 20') mit einem Abwasser-Zuleitungskanal verbunden ist und der abwasserfreie Bereich der letzten Behandlungszelle mit einer Unterdruckquelle (22, 22') verbunden ist.

7. Kläreinrichtung nach einem der Ansprüche 1 bis 6, dadurch gekennzeichnet, daß Behandlungszellenpakete aus miteinander verschweißten Zuschnitten oder Formlingen (10.1, 10.2) aus Blech oder Kunststoffmaterial bestehen.

8. Kläreinrichtung nach einem der Ansprüche 1 bis 6, dadurch gekennzeichnet, daß Behandlungszellenpakete in Betonfertigteile (29) eingeformt sind.

9. Kläreinrichtung nach Anspruch 1 und 2, dadurch gekennzeichnet, daß die Behandlungszellen (30) etagenweise übereinander angeordnet sind und das Klärwasser (36) jeweils mittels einer Lufthebevorrichtung (46) von einer tieferen auf eine höhere Etage anhebbar ist.

10. Kläreinrichtung nach Anspruch 1 und 2, dadurch gekennzeichnet, daß die Behandlungszellen als Rohrkörper (111) ausgebildet sind.

11. Kläreinrichtung nach Anspruch 10, dadurch gekennzeichnet, daß an den Enden der rohrförmigen Behandlungszelle (111) ein Vorklärbehälter (112) oder ein Nachklärbehälter (113) angeordnet ist.

12. Kläreinrichtung nach Anspruch 10 oder 11, dadurch gekennzeichnet, daß der Gaseinleitungskörper als im Abwasser bewegliches, in Längsrichtung der Behandlungszelle (111) verlaufendes Rohr (130) ausgebildet ist.

13. Kläreinrichtung nach einem der Ansprüche 10 bis 12, dadurch gekennzeichnet, daß die rohrförmige Behandlungszelle (111) an ihren Stirnseiten jeweils teilweise durch eine Wandung (116, 120) verschlossen ist, die bis unter einen Mindestabwasserspiegel (135) reicht, sich mindestens über den halben Rohrquerschnitt erstreckt und eine ausreichend große Abwasser-Durchgangsöffnung (117, 121) frei läßt.

14. Kläreinrichtung nach einem der Ansprüche 10 bis 13, dadurch gekennzeichnet, daß in der rohrförmigen Behandlungszelle (111) beidseitig des Gaseinleitungsrohres (130) und mit Abstand von ihm innerhalb des Abwasserbereiches vertikale Leitwandungen (139) angeordnet sind, deren Längsränder mit Abstand von der Rohrwandung und vom Abwasserspiegel (135) verlaufen.

15. Kläreinrichtung nach einem der Ansprüche 1 bis 14, dadurch gekennzeichnet, daß in den Behandlungszellen (10) zusätzlich im Abwasser bewegbare Dispergierkörper (24) angeordnet sind.

16. Kläreinrichtung nach Anspruch 15, dadurch gekennzeichnet, daß als Dispergierkörper axial verstellbare Scheibenkörper (24) mit durch Runddrähte begrenzten Durchlaßöffnungen vorgesehen sind.

17. Kläreinrichtung nach einem der Ansprüche 1 bis 16, dadurch gekennzeichnet, daß am Boden der Behandlungszellen (10, 10'; 30; 111) Schlammabsetzbereiche ausgebildet sind, die über verschließbare Entleerungsöffnungen (27, 27') oder mittels einer eingebauten Fördervorrichtung (141/142) entleerbar sind.

18. Kläreinrichtung nach einem der Ansprüche 1 bis 17, dadurch gekennzeichnet, daß der mindestens eine eingesetzte Unterdruckerzeuger (22, 22'; 42; 127) als Ventilator ausgebildet ist.

19. Kläreinrichtung nach Anspruch 18, dadurch gekennzeichnet, daß auf der Ausgangsseite des Ventilators ein Filter (128) angeordnet ist.

20. Verfahren zum Betrieb einer Kläreinrichtung nach einem der Ansprüche 1 bis 19, dadurch gekennzeichnet, daß der mindestens eine eingesetzte Unterdruckerzeuger unter Erzeugung von Unterdruckimpulsen betrieben wird.

21. Verfahren zum Betrieb einer Kläreinrichtung nach einem der Ansprüche 1 bis 19, dadurch gekennzeichnet, daß mindestens einer von mehreren zur Unterdruckerzeugung eingesetzten Ventilatoren ein Behandlungsgas im geschlossenem Kreislauf über den Gaseinleitungskörper mindestens einer Behandlungszelle bewegt.

22. Verfahren zum Betrieb einer Kläreinrichtung nach einem der Ansprüche 1 bis 19, dadurch gekennzeichnet, daß ein Teilstrom mindestens eines der eingesetzten Ventilatoren (42) über Gaseinleitungskörper (34) in Behandlungszellen (30) zurückgeleitet wird.
